# EUROPÄISCHE PATENTANMELDUNG

(11) **EP 0 648 653 A1**
(43) Veröffentlichungstag der Anmeldung: **19.04.1995**
(21) Anmeldenummer: 94116089.7
(22) Anmeldetag: 12.10.1994
(51) Int. Cl.: B60R 25/00, B60R 13/10, G08G 1/017

(54) **Anordnung und Verfahren zur manipulationsgeschützten Identifikation von Fahrzeugen**

(30) Priorität: 16.10.1993 DE 4335316
(71) Anmelder: IFAM Ingenieurbüro für Applikation von Mikrocomputern GmbH, D-99084 Erfurt (DE)
(72) Erfinder: Conrad, Manfred, Dr., D-99084 Erfurt (DE); Kampf, Werner, D-99955 Herbsleben (DE); Meder, Michael, D-99439 Berlstedt (DE)
(74) Vertreter: Pfeiffer, Rolf-Gerd

(57) **Zusammenfassung**

Die Erfindung betrifft eine Anordnung und ein Verfahren zur Kennzeichnung, Identifikation und Verifikation von Kraftfahrzeugen. Die Aufgabe der Erfindung, eine benutzerfreundliche Lösung vorzuschlagen, die unter Verwendung an sich bekannter Bordcomputer, Identifikationsdatenträgern und Anzeigeelementen die mißbräuchliche Benutzung eines Fahrzeugs in hohem Maße erschwert, wird erfindungsgemäß dadurch gelöst, daß wenigstens ein mit Anzeigeelementen (8) vorgebbar veränderbaren Inhalts versehenes elektronisches Kennzeichen (1) vorgesehen ist, das selbst ein elektronisches Speicherelement (4) mit mehreren fahrzeugspezifischen Identifikationsdaten beinhaltet, dieses mit dem Bordcomputer (8) in Verbindung gebracht ist, in dem ein Identitätsvergleich dieser Daten mit in ihm gespeicherten Identifikationsdaten und mit Identifikationsdaten eines separaten Datenträgers (12), die über die Dateneingabevorrichtung (10) eingebbar sind, erfolgt.

## Beschreibung

Die Erfindung betrifft eine Anordnung und ein Verfahren zur manipulationsgeschützten Identifikation von Kraftfahrzeugen nach der Gattung der unabhängigen Patentansprüche.
Bekannt sind Kennzeichenschilder an Kraftfahrzeugen, die in der Regel aus Blech oder Kunststoff in Form von aus der Ebene herausgedrückten Buchstaben und Ziffern gefertigt sind. Zusätzlich zum Kennzeichen dienen zur Identifikation des Fahrzeugs die im Kraftfahrzeugbrief enthaltenen technischen Daten des Fahrzeugs, wie Fahrgestellnummer, Motornummer, usw. sowie die im Kraftfahrzeugschein von einer Behörde festgehaltenen Daten des Fahrzeughalters oder -führers.
Derartige Kennzeichenschilder können relativ einfach von unbefugten Personen hergestellt und ausgetauscht Werden, Kraftfahrzeugbriefe und Kraftfahrzeugscheine sind nicht fälschungssicher.
Zur Vermeidung des Diebstahls von Kraftfahrzeugen sind eine Vielzahl von mechanischen Diebstahlsperren und elektronischen Alarmierungseinrichtungen bekannt. Ihnen allen haftet der gemeinsame Mangel an, daß sie als eigenständige (stand-alone) Geräte einen im Fahrzeug örtlich begrenzten Einfluß haben (z.B. Lenker-, Fenster-, oder Kofferraumdeckelschloß), oder einen Spannungsabfall beim unbefugten Starten des Fahrzeugs zur Alarmierung auswerten oder Bewegungen des oder Geräusche am Fahrzeug zur Alarmierung ausnutzen.
Ebenfalls bekannt geworden sind zur Umgehung derartiger mechanischer und elektronischer Alarmierungssysteme sogenannte elektronische Wegfahrsperren. Solche Systeme unterbrechen einige Sekunden, nachdem die Zündung ausgeschaltet und die Tür geöffnet wurde, die Stromversorgung zum Anlasser solange, bis in einer meist mit 10 Tasten versehenen Tastatur eine mehrstellige Codezahl eingegeben wird und verweigern gänzlich die Startmöglichkeit bei mehrfach falscher Eingabe. Abgesehen davon, daß derartige Systeme von "Spezialisten" auch relativ schnell überwindbar sind, stellt ihre ständig notwendige Bedienung durch den berechtigten Fahrzeugführer auf die Dauer doch eine Behinderung dar.

Desweiteren sind in den letzten Jahren sogenannte ID-TAG's (in der Literatur auch als Contactless Identification Devices (CIDs) bekannt geworden. Dabei handelt es sich um integrierte Schaltkreise, die eine Identifikationsnummer in einem Speicher enthalten, die z.B. über eine RF-Antenne, Spule oder Mikrowellenantenne abrufbar ist. Je nach Ausführung sind diese Systeme, die z.B. in der Produktionssteuerung, Zugangskontrolle, Tierhaltung usw. Anwendung finden, in Abständen von wenigen Millimetern bis zu einigen Metern les- bzw. beschreibbar (Hascher, W., "Chips mit Antenne", Elektronik 9/1993, S. 95 ff.; "CIDs: Schaltungen für kontaktlose Identifikation", Elektronik-Entwicklung 1-2/93, S.10 ff.).

Der Erfindung liegt somit die Aufgabe zugrunde, unter Verwendung ansich bekannter Bordcomputer, Datenträger, Dateneingabevorrichtungen und eines neuartigen Fahrzeugkennzeichens die mißbräuchliche Benutzung eines Fahrzeugs in der Weise zu erschweren, daß kraftfahrzeugspezifische Daten keiner Manipulation unterwerfbar sind, wobei für den berechtigten Fahrzeugführer eine benutzerfreundliche Lösung mit geringem Bedienungsaufwand zu schaffen ist.

Die Aufgabe wird durch die kennzeichnenden Merkmale der Patentansprüche gelöst. Das Wesen der Erfindung besteht darin, daß auf einer Chipkarte befindliche spezifische Daten über eine Dateneinlesevorrichtung einem Bordcomputer zwecks Vergleich dort ebenfalls gespeicherter im wesentlichen identischer Daten zugeführt werden und zugleich ein Vergleich mit von einem Speicherelement des Kennzeichens stammenden analogen Daten durchgeführt wird. Für die Speicherelemente auf der Chipkarte und den Speicherelementen des Kennzeichens wird zweckmäßigerweise jeweils ein sogenannter ID-TAG eingesetzt, dessen Arbeitsweise bekanntermaßen auf einer Speicherung von Informationen beruht, die nur nach Identifikation geschrieben oder gelesen werden können. Ebenso sind allerdings für die Chipkarte beliebige andere Speichermedien, wie z.B. auch Magnetkarten denkbar, die allerdings weniger fälschungssicher sind, durch die Erfindung jedoch nicht ausgeschlossen werden. Die ID-TAG's sind zweckmäßigerweise so ausgeführt, daß sie Speicherbereiche aufweisen, die nur einmal beschrieben und danach nicht mehr verändert werden können (ROM, PROM) und wenigstens einen weiteren mehrfach veränderbaren (überschreibbaren) Speicherbereich beinhalten (EPROM, EEPROM). In weiterer Ausgestaltung der Erfindung ist zumindest der ID-TAG des Kennzeichens so ausgeführt, daß er über eine räumliche Entfernung berührungsfrei schreib- und lesbar ist. Derartige Systeme sind z.B. aus der berührungsfreien Werkzeugerkennung, Zugangskontrolle, Tierhaltung und Produktionssteuerung hinreichend bekannt und bedürfen an dieser Stelle keiner weiteren Ausführungen.
Gemäß der Erfindung ist dem Fahrzeugkennzeichen ein Halbleiterspeicherchip und ein Mikrocomputer (im nachfolgenden Anzeigecomputer genannt) und ggf. eine in unmittelbarer Nähe des Halbleiterchips befindliche Leseeinheit zugeordnet. Ein zweiter Computer (im nachfolgenden Bordcomputer genannt), ebenfalls zur Speicherung der technischen Daten des Fahrzeugs, steht mit dem Anzeigecomputer und einer Datenleseeinheit in Verbindung. Der Bordcomputer nimmt einen Vergleich der im Bordcomputer gespeicherten Daten mit allen vom Anzeigencomputer kommenden Daten des elektronischen Kennzeichens vor, vergleicht die im Bordcomputer gespeicherten persönlichen Daten des Kraftfahrzeughalters und die technischen Daten des Fahrzeugs mit den auf der Chipkarte gespeicherten persönlichen Daten des Fahrzeughalters und den auf der Chipkarte gespeicherten technischen Daten des Fahrzeugs und gibt bei Übereinstimmung bspw. den Startvorgang des Zündschlosses frei.
Die schreib- und lesbare Chipkarte mit ID-TAG enthält zur Verdeutlichung der erfindungsgemäßen Anordnung unterschiedliche Speicherbereiche. Die Chipkarte läuft mit dem Fahrzeug von dessen Entstehung bis zur Verschrottung ständig parallel mit. Ein Teil der Chipkarte mit ID-TAG erhält nach der Endmontage des Fahrzeugs beim Hersteller sämtliche technischen Daten in einem "Nur Lese-Speicher" (ROM) eingebrannt. Gleichzeitig wird für die spätere Verifikation des Fahrzeugs die gleiche technische Information z.B. über einen Mikrowellensender in den ID-TAG im Fahrzeugkennzeichen eingebrannt. In der Regel sollten dies sein: Fahrgestellnummer, Motornummer, Hersteller, Fahrzeugtyp, Fahrzeugidentifikationsnummer, Schlüssel-nummer, Motorleistung, Nutzlast, Abmessungen, Gesamtgewicht u.a., d.h. alle technischen Daten des Kraftfahrzeugbriefes.
Das elektronische Kennzeichen, bestehend aus elektronischen Anzeigeelementen, einem Anzeigecomputer, einem ID-TAG mit einem ggf. erforderlichen ID-TAG-Leser, wird während der Produktion komplett am Fahrzeug als universelle Einheit montiert. Diese Kennzeichen unterscheiden sich untereinander im wesentlichen durch die unterschiedlich eingespeicherten technischen Kennwerte des Fahrzeugs und durch eine individuelle ID-TAG-Indentifikationsnummer.
In einer Zulassungsstelle werden dem Fahrzeug das amtliche Kennzeichen und die persönlichen Daten des Fahrzeughalters zugeordnet. Dies geschieht erfindungsgemäß, indem weitere Speicherbereiche (Schreib-Lese-Speicher) des ID-TAG im elektronischen Kennzeichen über ein Übertragungsmedium, z.B. mittels einer Mikrowellen-Sende- und Empfangseinheit mit dem amtlichen Kennzeichen und den persönlichen Daten, vergleichbar mit den Angaben im Fahrzeugschein (Name, Vorname u.a.m.) belegt werden.
Auch die Angaben zur nächsten Hauptuntersuchung (HU) und Abgassonderuntersuchung (ASU) werden in einem weiteren Speicherbereich des ID-TAG's im elektronischen Kennzeichen abgelegt. Die zum Kraftfahrzeug gehörige Chipkarte mit ID-TAG wird im frei programmierbaren, schreib- und lesbaren Teil des Speichers mit den gleichen Daten wie der ID-TAG im elektronischen Kennzeichen programmiert. Datum, Zulassungsstelle und autorisierte Person der Eintragung in den ID-TAG's sind in einem Zentralcomputer für spätere Überprüfungen registrier- und abspeicherbar.
Die Zulassungsstelle nimmt weiterhin die Programmierung des Bordcomputers mit den persönlichen Daten und dem amtlichen Kennzeichen, Datum der HU und ASU vor. Über den Bordcomputer wird der Anzeigecomputer aktiviert. Der Bordcomputer stellt Übereinstimmung der Identifikationsnummer des ID-TAG im elektronischen Kennzeichen mit der im Bordcomputer gespeicherten Identifikationsnummer fest, vergleicht daraufhin die Daten von ID-TAG des Kennzeichens und setzt die elektronischen Anzeigefelder des Kennzeichens in Gang. Damit ist die Programmierung des Identifikationssystems abgeschlossen.

Der Halter des Fahrzeugs erhält die Chipkarte mit ID-TAG mit den nicht löschbaren technischen Daten des Fahrzeugs, den von der Zulassungsstelle programmierten persönlichen Daten, dem amtlichen Kraftfahrzeugkennzeichen und den Daten für HU und ASU.

Um den Startvorgang des Fahrzeugs zu ermöglichen, steckt die berechtigte Person die Chipkarte mit dem ID-TAG in einen Kartenleser des Bordcomputers. Dieser überprüft die Identifikationsnummer des ID-TAG der Chipkarte, stellt Übereinstimmung fest und vergleicht die Dateninhalte von Bordcomputer und dem ID-TAG der Chipkarte, gleichzeitig bzw. nachgesetzt startet er die Abfrage des Anzeigecomputers des elektronischen Kennzeichens.
Der Anzeigecomputer übermittelt aus dem ID-TAG des elektronischen Kennzeichens die Identifikationsnummer an den Bordcomputer, dieser leitet bei Übereinstimmung die Abfrage der bei der Herstellung des Fahrzeugs eingebrannten technischen Kennwerte des Fahrzeugs, der persönlichen Daten der bei der Zulassungsstelle eingegebenen Daten und der Daten des amtlichen Fahrzeugkennzeichens ein.
Erst bei völliger Übereinstimmung aller in genannten drei Speichern abgelegter Daten wird elektronisch bspw. der Schlüsselschalter des Anlassers zum Start freigegeben und das Fahrzeug in Fahrbereitschaft gesetzt.

Durch die erfindungsgemäße Lösung wird der Diebstahl bzw. die unberechtigte Inbetriebnahme des Fahrzeugs verhindert. Ohne die dem Fahrzeug zugeordnete Chipkarte mit ID-TAG wird der Start des Fahrzeugs weitestgehend ausgeschlossen.
Die Demontage des Kennzeichnungsschildes und das Anbringen eines Kennzeichens eines zugelassenen Fahrzeugs bringen keine Übereinstimmung zwischen Anzeigecomputer, Bordcomputer und Chipkarte. Dieser Negativvergleich ließe sich schaltungstechnisch z.B. derart umsetzen, daß die Anzeigefelder des Kennzeichens verlöschen.
Erst der gemeinsame Diebstahl von Chipkarte und Fahrzeug könnte ein Fortbewegen des Fahrzeugs ermöglichen, die erfindungsgemäße Lösung stellt jedoch einen hohen Fahndungserfolg in Aussicht, da einerseits ein nachträglicher Austausch des Kennzeichenschildes nicht möglich ist, andererseits die Überprüfung von Kraftfahrzeugen durch die erfindungsgemäße Anordnung äußerst einfach ist.
Beispielsweise lassen sich Streifenwagen mit einem Chipkartenlesegerät und einem Laptop ausstatten, so daß ein Vergleich der Personendaten, des Kennzeichens und der technischen Daten mit den Daten, die auf der Chipkarte im ID-TAG gespeichert sind, vorgenommen werden kann.
Auch ist die Fahrzeugkontrolle ohne Mitarbeit des Fahrzeugführers durch die erfindungsgemäße Anordnung eines ID-TAG im Fahrzeugkennzeichen einfach vorzunehmen, in dem an einem vorgegebenen Haltepunkt (z.B. Grenzübergang) mit einem ID-TAG Lesegerät aus Entfernungen von mehreren Metern die Daten des ID-TAG des elektronischen Kennzeichens eingelesen werden können, wodurch sich die Polizeifahndung vereinfacht durchführen läßt.
Zum Beispiel ist das Zusammenschalten eines ID-TAG-Lesegerätes mit einem Computer und einer Modem-Leitung zu einer Zentralkartei eines Zentralcomputers denkbar, so daß z.B. an Grenzstellen die Identität von Fahrzeugen ermittelt werden kann.
Auch ist denkbar die erfindungsgemäße Anordnung zur Erfassung der Fahrzeuge für die Benutzung von Autobahnen zu verwenden. An der Autobahnauffahrt anzubringende Mikrowellensende- und Empfangsanlagen fragen das elektronische Kennzeichen ab, melden Kennzeichen, Auffahrtort und Uhrzeit vernetzten Autobahncomputern und erfassen bei Abfahrt von der Autobahn das Kennzeichen erneut. Fahrzeuge, die nicht mit einer vorgesehenen sogenannten On-Board-Unit ausgestattet sind, wo die Gebühr automatisch abgebucht werden soll, könnten so ohne aufwendige Technik ermittelt werden.
Ebenso einfach ließe sich mit der erfindungsgemäßen Anordnung die Überprüfung abgestellter Fahrzeuge auf öffentlichen Straßen und Parkplätzen durch z.B. Angestellte eines Ordnungsamtes vornehmen. Mit einem entsprechenden ID-TAG-Lesegerät als Handheld-Gerät vereinfachte sich das Erfassen von Fahrzeugen sowie die Beweisführung für nicht ordnungsgemäßes Parken, indem die Daten des Fahrzeughalters und des Nummernschildes aus dem ID-TAG des elektronischen Kennzeichens ausgelesen und mit Datum, Zeit und Ort ergänzt, als Bescheid über ein Verwarnungsgeld ausgedruckt werden könnten.
Mit der erfindungsgemäßen Anordnung lassen sich Fahrzeuge schnell ohne Mithilfe und ohne Kenntnis des Fahrzeugführers identifizieren, so daß die Erfindung eine hohe Fahndungsquote möglich machen würde.
Die Erfindung soll anhand schematischer Zeichnungen im nachstehenden näher erläutert werden. Es zeigen:
- Fig. 1: einen prinzipiellen Aufbau eines elektronischen Kennzeichenschildes,
- Fig. 2: einen Bordcomputer mit Einlesegerät,
- Fig. 3: eine Chipkarte mit ID-TAG,
- Fig. 4: eine Hardwareausrüstung einer technischen Überwachungsstelle,
- Fig. 5: eine Hardwareausrüstung eines polizeilichen Streifendienstes und
- Fig. 6: eine Hardwareausrüstung einer Zulassungsstelle.

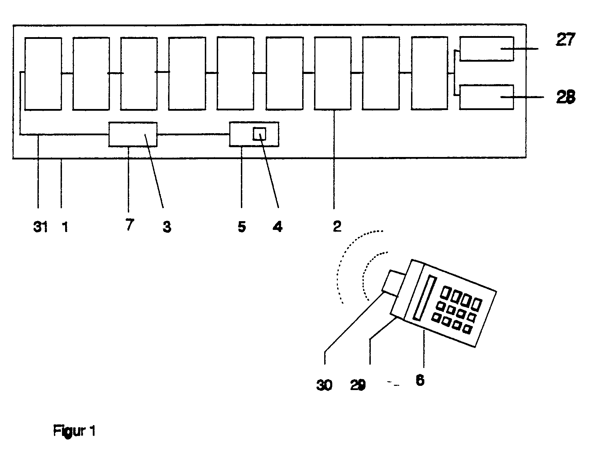

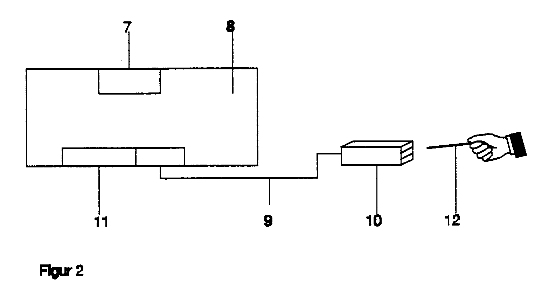

In Fig. 1 ist ein elektronisches Kennzeichenschild 1 dargestellt, welches aus ansich bekannten Anzeigeelementen 2, z.B. lichtemittierende Dioden (LED), Flüssigkristallanzeigen (LCD) oder Gasentladungsröhren bestehen kann. Die Anzeigeelemente 2 sind den üblichen Kennzeichenschildern in Abmessung, Abstand und Form nachgebildet, sollten am Tag reflektierend und nachts selbstleuchtend sein und bestehen in der Regel aus acht bis neun alphanumerischen Einzelelementen, die kaskadiert die Möglichkeit der Darstellung üblicherweise verwendeter Zahlen und Buchstaben-kombinationen zulassen. Im elektronischen Kennzeichenschild 1 ebenfalls untergebracht ist ein Mikrocomputer als Anzeigecomputer 3, ein ID-TAG 4 und eine Schreib-Lese- Einheit 5 für den ID-TAG. Ferner ist in Fig. 1 ein ID-TAG-Schreib- und Lesegerät 6 dargestellt, das im Ausführungs-beispiel über eine Sende- und Empfangseinheit 29 mit dazugehöriger Antenne 30 aus einer Entfernung von mehreren Millimetern bis in den Meterbereich die berührungsfreie Programmierung und Abfrage gestattet.
Über einen Anschluß 7 erfolgt eine Verbindung des Anzeigecomputers 3 mit einem in Fig. 2 dargestellten Bordcomputer 8 durch Verwendung eines ansich ebenfalls bekannten Bussystems. Über einen Anschluß 26 erfolgt die Verbindung des Anzeigencomputers 3 mit den Anzeigeelementen 2.

Auf dem elektronischen Kennzeichnungsschild sind vorteilhaft weitere Anzeigefelder 27, 28 als Datumsanzeigefelder für die HU und ASU untergebracht, die ebenfalls über den Anschluß 26 mit dem Anzeigecomputer 3 in Verbindung stehen, deren Programmierung über den ID-TAG bei der Erstzulassung des Fahrzeugs oder nach Ablauf der Zulassungszeit und bei Wiedervorstellung des Fahrzeugs durch einen Technischen Überwachungsverein erfolgt.
Denkbar ist ebenso die Programmierung einer Zeitfrist, so daß der Bordcomputer nach Erreichen der Ablaufzeit optische und/oder akustische Signale sendet, die nach Überschreiten einer vorgegebenen Frist, z.B. von vier Wochen, zum Abschalten der Anzeigefelder führen.

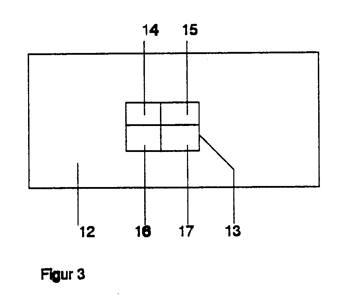

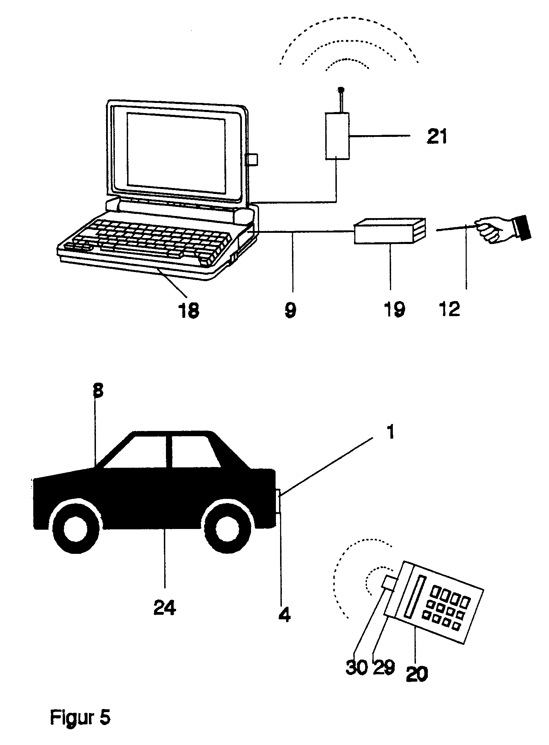

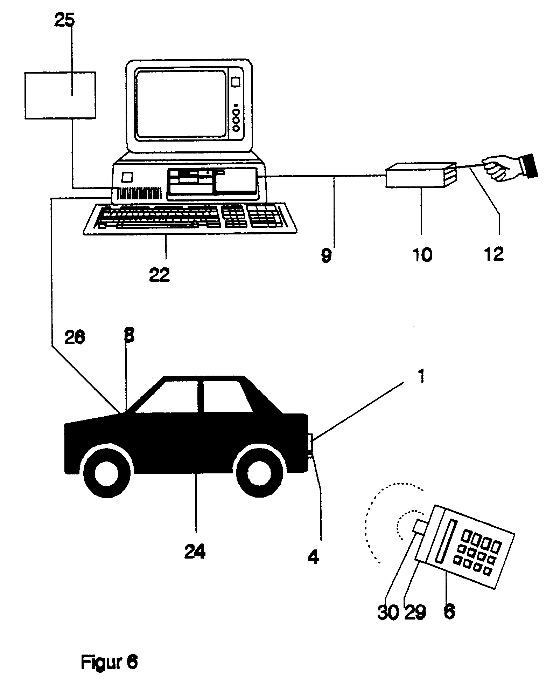

In Fig. 2 ist der Bordcomputer 8 schematisch dargestellt. Er verfügt über einen Anschluß 9 für ein Chiplesegerät 19 und den Anschluß 7 zu dem in Fig. 1 dargestellten Anzeigecomputer 3.
Als weiteres verfügt der Bordcomputer 8 über eine serielle oder parallele Schnittstelle 11, welche an einen Personalcomputer 22 oder tragbaren Computer 18, z.B. einen Laptop der Zulassungsstelle (Fig. 6) oder eines Streifendienstes (Fig. 5), angeschlossen werden kann. Über die serielle oder parallele Schnittstelle 11 des Bordcomputers 8 werden das polizeiliche Kennzeichen und die persönlichen Daten des Fahrzeughalters sowie die Daten für HU und ASU von dein Personalcomputer 22 oder dem tragbaren Computer 18 von der Zulassungsstelle oder einem Technischen Überwachungsverein an den Bordcomputer 8 übertragen. Fig. 3 zeigt schematisch ein Ausführungsbeispiel einer Chipkarte mit ID-TAG 12 der üblichen Abmessungen 35 mm · 86 mm oder 54 mm · 86 mm.
Auf der Chipkarte mit ID-TAG 12 befindet sich schematisch angedeutet ein Speicherchip 13, im Ausführungsbeispiel ein EEPROM, dessen Speicherbereich zur besseren Darstellung bspw. in vier Bereiche aufgeteilt sein kann, ein Speicherbereich 14 für die nach der Herstellung des Fahrzeugs eingegebenen technischen Daten des Fahrzeugs, ein Speicherbereich 15 für die durch die Zulassungsstelle eingegebenen Daten des Fahrzeughalters, ein Speicherbereich 16 für das amtliche Kraftfahr-zeugkennzeichen und ein Speicherbereich für die Daten der HU und ASU.

Zur Identifikation des Fahrzeugs ist es sinnvoll, den Bereich 14 so zu gestalten, daß die Daten einmalig eingegeben, jedoch nicht mehr von außen veränderbar sind. Zweckmäßigerweise wird der Speicherbereich daher aus einem PROM, EPROM oder einem EEPROM gebildet, wo durch Einfügung eines Flags das Überschreiben des Speicherbereichs verhindert wird. In diesem Speicherbereich ist auch die Identifikationsnummer des ID-TAG gespeichert.

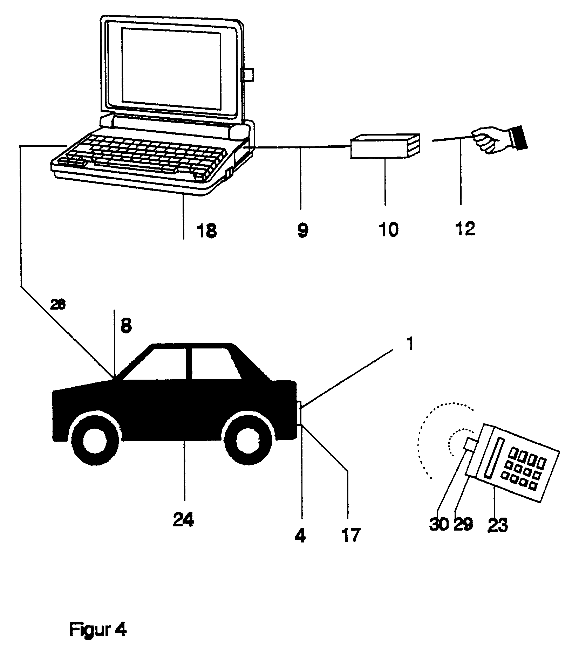

Fig. 4 zeigt schematisch Hardwarekomponenten einer technischen Überwachungsstelle. Ein tragbarer Computer 18 ist mit einem Chipkarten-Lese- und Schreibgerät 10 verbunden. Über ein ID-TAG-Schreibgerät 23 wird die Programmierung des Speicherbereiches 17 des im elektronischen Kennzeichenschild 1 befindlichen ID-TAG 4 vorgenommen. Im Chipkartenlese- und Schreibgerät 10 wird die Programmierung des zum Fahrzeug 24 gehörigen Datenträgers, im Ausführungsbeispiel eine Chipkarte mit ID-TAG 12 vorgenommen. Auf der Chipkarte mit ID-TAG 12 wird durch die technische Überwachungsstelle wiederum nur der Speicherbereich 17 überschrieben, der die Daten für einen technischen Überwachungsverein, d.h. HU und ASU, beinhaltet. Über die serielle oder parallele Schnittstelle 11 erfolgt die Programmierung des Bordcomputers 8 mit den gleichen Daten für HU und ASU.

Fig. 5 zeigt schematisch die Hardwarekomponenten eines Streifendienstes der Polizei zum Zwecke der Fahrzeug- und Personenidentifikation.
Ein tragbarer Computer 18 ist mit einem Chipkartenlesegerät 19 verbunden. Desweiteren befindet sich ein ID-TAG-Lesegerät 20 mit Sende- und Empfangseinheit 29 und Antenne 30 im Besitz des Streifendienstes.
Zur Personen- und Fahrzeugidentifikation werden vom Streifendienst über das ID-TAG-Lesegrät 20 die Personenkenndaten, die Fahrzeugdaten, das Kennzeichen und die Daten für die HU und ASU aus den vier Speicherbereichen des ID-TAG 4 gelesen und über den Anschluß 31 an den tragbaren Computer 18 übertragen. Über den Anschluß 9 werden die Daten der Chipkarte mit dem ID-TAG 12 des Fahrzeugführers in den tragbaren Computer 18 eingelesen, indem die Chipkarte in das ID-TAG 12 in das Chipkartenlesegerät 19 eingeführt wird.
Der Vergleich der Daten des ID-TAG-Lesegerätes 20 mit den Daten des Chipkartenlesegerätes 19 wird am tragbaren Computer 18 zur Ansicht gebracht. Eine Überprüfung der Person des Fahrzeugführers durch zusätzliche Kontrolle des Personalausweises bzw. Führerscheins sowie die Aufrage bei der örtlichen Zulassungsstelle über ein Funkgerät 21 lassen eine eindeutige Identifikation von Fahrzeug und Fahrzeugführer zu.

Fig. 6 zeigt schematisch die Hardwarekomponenten einer Zulassungsstelle. Ein Personalcomputer 22 ist mit einem Chipkarten Lese- und Schreibgerät 10 verbunden.
Bei der Erstzulassung des Fahrzeugs wird über den Anschluß 9 und mit Hilfe des Chipkartenlese- und -schreibgerätes 10 die fahrzeuggebundene Chipkarte mit ID-TAG 12 programmiert. Die technischen Daten des Fahrzeugs sind bereits durch die bei der Herstellung des Fahrzeugs vorgenommene Programmierung im Festwertspeicher der Chipkarte enthalten und nicht mehr überschreibbar.

Bei der Zulassungsstelle wird in die Chipkarte mit ID-TAG 12, die funktionell wie der ID-TAG 4 im elektronischen Kennzeichenschild 1 aufgebaut ist, der Speicherbereich 15 mit den Daten des Fahrzeughalters, der Speicherbereich 16 mit den Daten des zugewiesenen Kennzeichens und der Speicherbereich 17 mit den Daten für HU und ASU programmiert.
Ein ID-TAG-Schreib- und -lesegerät 6 dient zur Programmierung des ID-TAG 4 im elektronischen Kennzeichenschild 1 des Fahrzeugs 24.
Es werden wie in der Chipkarte mit ID-TAG 12 im ID-TAG 4 die persönlichen Daten des Fahrzeughalters im Speicherbereich 15, die Daten des Fahrzeugkennzeichens im Speicherbereich 16 und die Daten für HU und ASU im Speicherbereich 17 programmiert.

Nach dem Programmieren der Chipkarte mit ID-TAG 12 und des ID-TAG 4 erfolgt über die Schnittstelle 11 die Programmierung des Bordcomputers 8 im Fahrzeug 24. Damit ist die Programmierung insgesamt abgeschlossen, das Fahrzeug ist gegen Diebstahl und unberechtigte Benutzung geschützt.
Über ein Modem 25 sind die programmierten Daten, ergänzt um Datum, Ort, Dienststelle und autorisierte Person der Zulassungsstelle, an eine zentrale Erfassungsstelle übergeb- und dort abspeicherbar.
Bei Fahrzeugbesitzerwechsel werden auf der Chipkarte mit ID- TAG 12 die persönlichen Daten des bisherigen Besitzers gelöscht und mit den Daten des neuen Besitzers überschrieben. Der ID-TAG 4 und der Bordcomputer 8 werden in gleicher Weise neu programmiert.
Bei Überführung des Fahrzeugs in ein anderes Kennzeichengebiet werden neben den persönlichen Daten des bisherigen Besitzers auch die Daten für das alte Kennzeichen gelöscht. Zweckmäßigerweise wird das Fahrzeug zur Überführung mit einem Überführungskennzeichen versehen, welches so programmiert ist, daß nach einer Frist, z.B. von 14 Tagen, das Kennzeichen automatisch erlischt, wenn bis dahin das Fahrzeug am neuen Zulassungsort nicht angemeldet wurde.
Soll das Fahrzeug für längere Zeit stillgelegt werden, wird im ID-TAG 4 der Speicherbereich für das Fahrzeugkennzeichen 16 gelöscht und bei Wiederzulassung erneut aktiviert.

Alle bei der Erfindung zum technischen Einsatz gelangende Bauteile sind grundsätzlich verfügbar und nach entsprechender Anpassung an den erfindungsgemäßen Einsatz unter zu Hilfenahme üblichen Fachwissens anpaßbar.

Das Hauptanwendungsgebiet der Erfindung erstreckt sich auf die Kennzeichnung, Identifikation und Verifikation von Kraftfahrzeugen, beschränkt die Erfindung jedoch nicht darauf. Ebenso kann die Erfindung bei anderen Verkehrsmitteln, die mit einem Kennzeichen ausgerüstet sind, in gleicher Weise Anwendung finden.

### Bezugszahlenliste

- 1: - Kennzeichenschild
- 2: - Anzeigeelemente
- 3: - Anzeigecomputer
- 4: - ID-TAG des Kennzeichenschildes
- 5: - Schreib-Lese-Einheit
- 6, 7, 9: - Schreib- und Lesegerät
- 26, 31: - Anschlüsse
- 8: - Bordcomputer
- 10: - Schreibgerät
- 11: - Schnittstelle
- 12: - ID-TAG der Chipkarte
- 13: - Speicherchip
- 14, 15, 16: - unlöschbarer Speicherbereich
- 17: - überschreibbare Speicherbereiche
- 19: - Chiplesegerät
- 20: - ID-TAG-Lesegerätes
- 21: - Funkgerät
- 22: - Personalcomputer
- 23: - ID-TAG-Schreibgerät
- 24: - Fahrzeug
- 25: - Modem
- 27, 28: - Anzeigefelder
- 29: - Sende- und Empfangseinheit
- 30: - Antenne

## Patentansprüche

1. Anordnung zur manipulationsgeschützten Identifikation von Fahrzeugen, bei denen ein mit einer Dateneingabevorrichtung verbundener Bordcomputer vorhanden ist, dadurch gekennzeichnet, daß wenigstens ein mit Anzeigeelementen vorgebbar veränderbaren Inhalts versehenes elektronisches Kennzeichen vorgesehen ist, das selbst ein elektronisches Speicherelement (4) mit mehreren fahrzeugspezifischen Identifikationsdaten beinhaltet, dieses mit dem Bordcomputer in Verbindung gebracht ist, in dem ein Identitätsvergleich zumindest genannter fahrzeugspezifischer Daten des elektronischen Speicherelements (4) mit identisch im Bordcomputer gespeicherten analogen Identifikationsdaten erfolgt und ein weiterer Datenvergleich mit Identifikationsdaten, die ebenso zumindest genannte fahrzeugspezifische Identifikationsdaten umfassen, die mittels eines separaten Datenträgers, über die im Fahrzeug befindliche Dateneingabevorrichtung eingebbar sind, erfolgt.

2. Anordnung nach Anspruch 1., dadurch gekennzeichnet, daß das innerhalb des elektronischen Kennzeichens (1) angeordnete elektronische Speicherelement als ID-TAG (4) ausgeführt ist.

3. Anordnung nach Anspruch 1. und 2., dadurch gekennzeichnet, daß dem ID-TAG (4) eine Schreib-Leseeinrichtung (5) unmittelbar zugeordnet ist.

4. Anordnung nach Anspruch 1. bis 3., dadurch gekennzeichnet, daß der ID-TAG (4) innerhalb des elektronischen Kennzeichens (1) mit einem Anzeigecomputer (3) verbunden ist.

5. Anordnung nach Anspruch 1. bis 4., dadurch gekennzeichnet, daß die Verbindung des elektronischen Speicherelements über den Anzeigecomputer mit dem Bordcomputer über ein Bus-System erfolgt.

6. Anordnung nach Anspruch 1., dadurch gekennzeichnet, daß als Datenträger für über die Eingabevorrichtung zuführbaren Daten ebenfalls ein ID-TAG (12) zum Einsatz gelangt, der vorzugsweise innerhalb einer Chipkarte angeordnet ist.

7. Anordnung nach Anspruch 1. bis 4., dadurch gekennzeichnet, daß der ID-TAG (4) des elektronischen Kennzeichens vom Fahrzeugäußeren berührungsfrei auslesbar und programmierbar ist.

8. Anordnung nach Anspruch 1., 2. und 6., dadurch gekennzeichnet, daß den ID-TAG's (4, 12) ein Speicherbereich gegeben ist, in dem wesentliche fahrzeugspezifische Daten unlöschbar gespeichert sind.

9. Anordnung nach Anspruch 1., 2. und 6., dadurch gekennzeichnet, daß den ID-TAG's (4, 12) wenigstens ein überschreibbarer Speicherbereich gegeben ist.

10. Anordnung nach Anspruch 1., 2., 6., 7. oder 9., dadurch gekennzeichnet, daß den ID-TAG's neben unlöschbaren Bereichen mehrere von verschiedenen Zugriffsberechtigten getrennt oder gemeinsam überschreibbare Speicherbereiche gegeben sind.

11. Anordnung nach Anspruch 1., 2., 6., 7., 9. oder 10., dadurch gekennzeichnet, daß die externe Programmierung bzw. Auslesung des ID-TAG (4) des elektronischen Kennzeichens (1) elektromagnetisch, optisch oder akustisch vornehmbar ist.

12. Anordnung nach Anspruch 1. oder 6., dadurch gekennzeichnet, daß die Programmierung des ID-TAG (12) der Chipkarte kontaktbehaftet oder berührungsfrei elektromagnetisch, optisch oder akustisch vornehmbar ist.

13. Anordnung nach einem der vorstehenden Ansprüche, dadurch gekennzeichnet, daß der ID-TAG (4) des elektronischen Kennzeichens (1), der ID-TAG (12) der Chipkarte und der Bordcomputer (8) zumindest die wesentlichen fahrzeugspezifischen Daten identisch beinhaltet.

14. Anordnung nach Anspruch 1., dadurch gekennzeichnet, daß das elektronische Kennzeichen (1) von außen unlösbar am Fahrzeug angebracht ist.

15. Anordnung nach einem der vorstehenden Ansprüche, dadurch gekennzeichnet, daß ein einmal vergebenes und auf dem elektronischen Kennzeichen (1) dargestelltes amtliches Kennzeichen einzig durch vollständige Umprogrammierung der dafür vorgesehenen Speicherbereiche auf den ID-TAG's (4, 12) des elektronischen Kennzeichens, der Chipkarte und des Bordcomputers (8) veränderbar ist.

16. Verfahren zur manipulationsgeschützten Identifikation von Fahrzeugen, bei denen ein mit einer Dateneingabevorrichtung verbundener Bordcomputer vorgesehen wird, dadurch gekennzeichnet, daß auf einem der Dateneingabevorrichtung zuführbaren Datenträger gespeicherte Daten mit im Bordcomputer gespeicherten, zumindest teilweise identischen Daten, verglichen werden und danach oder zeitgleich ein Vergleich genannter zwei Datensätze mit zumindest teilweise identischen Daten, die in einem Speicherelement im elektronischen Kennzeichen gespeichert sind, durchgeführt wird, und erst bei Übereinstimmung genannter drei Datensätze ein ungehinderter Startvorgang über ansich bekannte weitere Mittel ermöglicht wird.

17. Verfahren nach Anspruch 16., dadurch gekennzeichnet, daß bei nichtidentischem Datenvergleich auch nur eines der durchgeführten Datenvergleiche das elektronische Kennzeichen des Fahrzeugs durch entsprechende Ansteuerung seiner Anzeigeelemente zum Erlöschen gebracht wird und/oder die Zündvorrichtung des Fahrzeugs unterbrochen wird und/oder eine im Fahrzeug befindliche Alarmvorrichtung ausgelöst wird.
